# FASCICULE DE BREVET EUROPEEN

(11) **EP 2 889 169 B1**
(45) Date de publication et mention de la délivrance du brevet: **18.04.2018**
(21) Numéro de dépôt: 14198371.8
(22) Date de dépôt: 16.12.2014
(51) Int. Cl.: B60H 3/06, B60H 1/00

(54) **Dispositif de chauffage, ventilation et/ou climatisation**
Vorrichtung zum Heizen, Belüften und/oder Klimatisieren
Heating, ventilation and/or air conditioning device

(30) Priorité: 30.12.2013 FR 1363713
(43) Date de publication de la demande: 01.07.2015
(73) Titulaire: VALEO SYSTEMES THERMIQUES, 78320 Le Mesnil Saint-Denis (FR)
(72) Inventeur: Barbier, Thierry, 78760 Jouars Pontchartrin (FR); Pernet, Stéphane, 78120 Rambouillet (FR)
(74) Mandataire: Tran, Chi-Hai

(56) Documents cités:
- JP-A- 2010 048 480
- JP-A- 2012 187 969
- US-A1- 2010 035 534

## Description

La présente invention concerne un dispositif de chauffage, ventilation et/ou climatisation pour un véhicule automobile.

Un véhicule automobile comporte un habitacle dans lequel débouche de l'air issu classiquement d'un dispositif de chauffage, ventilation et/ou climatisation.

Le véhicule comporte notamment une ou plusieurs buses de dégivrage situées à proximité du pare-brise, des aérateurs situés au niveau de la planche de bord et destinés à délivrer de l'air au conducteur et au passager, et des buses situées au niveau des pieds du conducteur et du passager (buses de pieds).

Le dispositif de chauffage, ventilation et/ou climatisation, également appelé HVAC (pour Heating, Ventilation and Air-Conditioning, en anglais) peut être alimenté soit en air extérieur au véhicule (également appelé air neuf), soit en air de recyclage, c'est-à-dire issu de l'habitacle du véhicule.

L'air extérieur est généralement peu chargé en humidité, lorsqu'il est froid, par comparaison avec l'air de recyclage, mais peut être relativement froid, en particulier en conditions hivernales. Il peut donc être relativement difficile à chauffer.

L'air de recyclage a généralement un taux d'humidité supérieur à l'air extérieur, puisqu'il a déjà été traité par le HVAC, mais est déjà à une température proche de la température à atteindre, c'est-à-dire proche de la température de consigne définie par exemple par le conducteur ou le passager.

Suivant les conditions de fonctionnement, il peut donc être particulièrement intéressant d'utiliser de l'air extérieur pour le rejeter dans l'habitacle au niveau des buses de dégivrage situées à proximité du pare-brise, après chauffage au travers du dispositif précité par exemple. Le taux d'humidité de l'air frais étant relativement faible, le risque de générer de la buée sur le pare-brise est donc également faible.

A l'inverse, il peut être avantageux d'utiliser de l'air de recyclage pour le rejeter dans l'habitacle au niveau des buses de pieds. De cette manière, même en conditions hivernales et lorsqu'un débit d'air important est demandé par le conducteur ou le passager, il est possible de réchauffer plus rapidement cet air de recyclage à la température de consigne avant qu'il ne soit rejeté dans l'habitacle. Le confort pour les utilisateurs est grandement accéléré et le risque de générer de la buée sur le pare-brise est faible, cet air de recyclage étant rejeté à distance du pare-brise.

Afin de profiter de tels avantages, il est important de pouvoir dissocier les flux d'air (air extérieur - air de recyclage), en particulier lors du passage desdits flux d'air au travers du dispositif de chauffage, ventilation et/ou climatisation.

A cela s'ajoute la nécessité de filtrer l'air extérieur et l'air de recyclage au travers d'un filtre logé dans ledit dispositif de chauffage, ventilation et/ou climatisation.

Ce filtre doit pouvoir être changé facilement, son changement permettant d'assurer la qualité de la filtration et éviter des pertes de charge importantes.

Le montage d'un filtre dans un dispositif de chauffage, ventilation et/ou climatisation est connu notamment du brevet FR 2 901 184 au nom de la Demanderesse. Le document JP 2012 187969 divulgue un dispositif selon le préambule de la revendication 1. Afin de garantir la séparation entre les deux flux d'air, tout en assurant la fonction de filtration, l'invention propose un dispositif de chauffage, ventilation et/ou climatisation pour un véhicule automobile, caractérisé en ce qu'il comporte un corps principal comportant au moins un premier canal de circulation d'air, destiné à alimenter une première partie d'un habitacle d'un véhicule automobile, un second canal de circulation d'air, destiné à alimenter une seconde partie de l'habitacle, un boîtier d'entrée d'air monté sur le corps principal, en amont desdits premier et second canaux de circulation du corps principal par rapport au sens de circulation de l'air, un filtre à air monté en amont desdits canaux de circulation du corps principal, par rapport au sens de circulation de l'air, le corps principal comportant une paroi de séparation séparant l'extrémité amont du premier canal de circulation et l'extrémité amont du second canal de circulation, le filtre à air étant logé, au moins en partie, dans une zone de placement du boîtier d'entrée d'air, le filtre à air reposant au moins en partie sur ladite paroi de séparation du corps principal, ladite paroi de séparation ayant, en vue de dessus, une forme de générale de S. Outre sa fonction de séparation des flux d'air directement en aval du filtre à air, la paroi de séparation sert de support au filtre afin d'éviter qu'il ne se déforme par flexion lorsqu'il est traversé par un flux d'air important. En effet, dans un tel cas, la pression générée en amont du filtre a tendance à faire fléchir le filtre, une telle flexion étant évitée dans l'invention par appui du filtre sur la paroi de séparation. Par ailleurs, l'invention permet l'utilisation d'un filtre unique assurant la fonction de filtration pour les deux canaux de circulation d'air.

Le premier canal de circulation d'air du corps principal peut alors alimenter par exemple les buses de dégivrage situées à proximité du pare-brise et le second canal de circulation d'air peut alors alimenter les buses de pieds.

Le corps principal peut comporter un passage comprenant une première extrémité apte à être ouverte vers l'extérieur du dispositif et une seconde extrémité ouverte en regard de la zone de placement du boîtier d'entrée d'air, de façon à permettre le montage ou le démontage du filtre.

Dans ce cas, la première extrémité du passage du corps principal peut comporter une trappe amovible ou mobile entre une position ouverte permettant l'insertion ou le retrait du filtre, et une position fermée.

De préférence, la trappe est équipée d'une paroi additionnelle de séparation, située dans le prolongement de la paroi de séparation, en position fermée de la trappe.

La paroi de séparation peut comporter un bord tourné vers la zone de placement, le filtre étant apte à s'appuyer sur ledit bord lors de son insertion dans ledit passage par la première extrémité.

Plus particulièrement, la paroi de séparation additionnelle de la trappe peut présenter une forme complémentaire à la paroi de séparation, de manière à former une paroi continue s'étendant le long du filtre et assurer ainsi une parfaite séparation des flux d'air directement en aval du filtre.

Le boîtier d'entrée d'air peut être traversé par un premier canal d'entrée, débouchant en regard du premier canal du corps principal, et par un second canal d'entrée débouchant en regard du second canal du corps principal, les premier et second canaux d'entrée du boîtier d'entrée d'air étant séparés par une cloison de séparation du boîtier d'entrée d'air, s'étendant en regard de la paroi de séparation du corps principal.

En outre, le corps principal peut être équipé de moyens de génération d'un premier flux d'air à l'intérieur du premier canal de circulation du corps principal et de moyens de génération d'un second flux d'air à l'intérieur du second canal de circulation du corps principal.

Dans ce cas, lesdits moyens de génération du premier et du second flux d'air comportent respectivement une première roue à ailettes et une seconde roue à ailettes, entraînées par exemple par un même moteur.

Avantageusement, le corps principal peut comporter un premier boîtier, équipé des moyens de génération du premier flux d'air, et dans lequel est délimitée au moins une partie du premier canal de circulation d'air, le corps principal comportant en outre un second boîtier, équipé des moyens de génération du second flux d'air, et dans lequel est délimitée au moins une partie du second canal de circulation d'air.

L'invention concerne également un véhicule automobile, caractérisé en ce qu'il est équipé d'un dispositif du type précité.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue de face d'un dispositif de chauffage, ventilation et/ou climatisation selon une forme de réalisation de l'invention,
- la figure 2 est une vue de côté du dispositif,
- les figures 3 et 4 sont des vues en section et en perspective du dispositif,
- les figures 5 et 6 sont des vues en section d'une partie du dispositif,
- les figures 7 à 9 sont des vues en section illustrant les positions successives du filtre lors de son montage dans le dispositif.

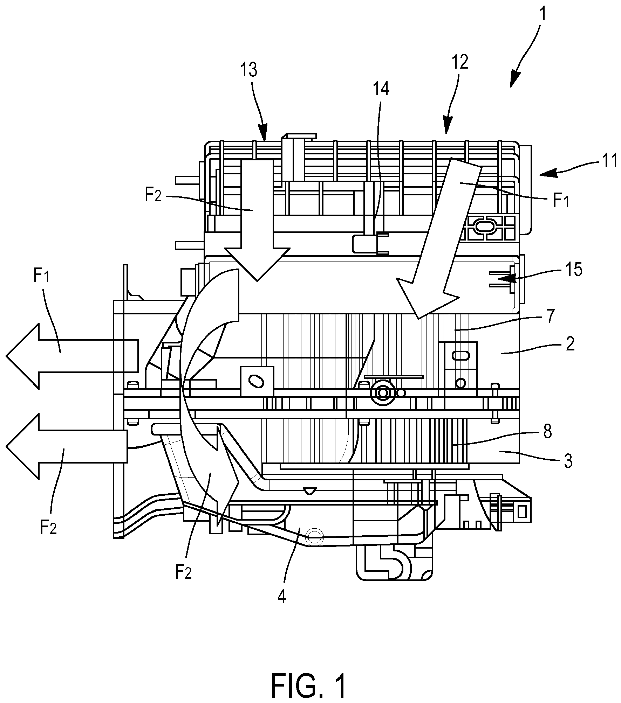

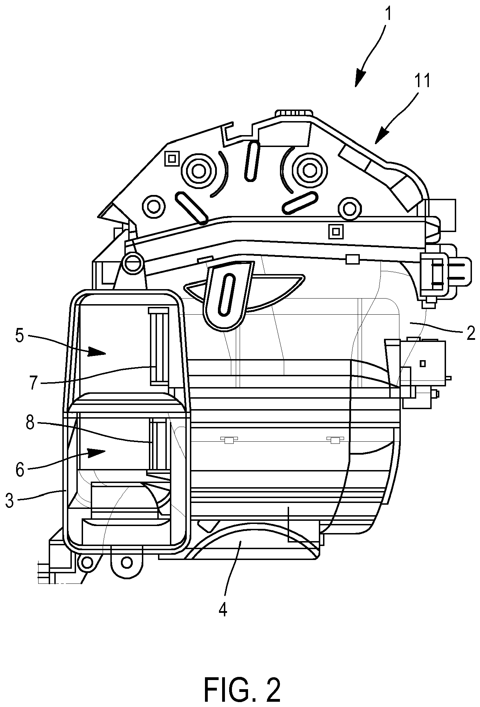

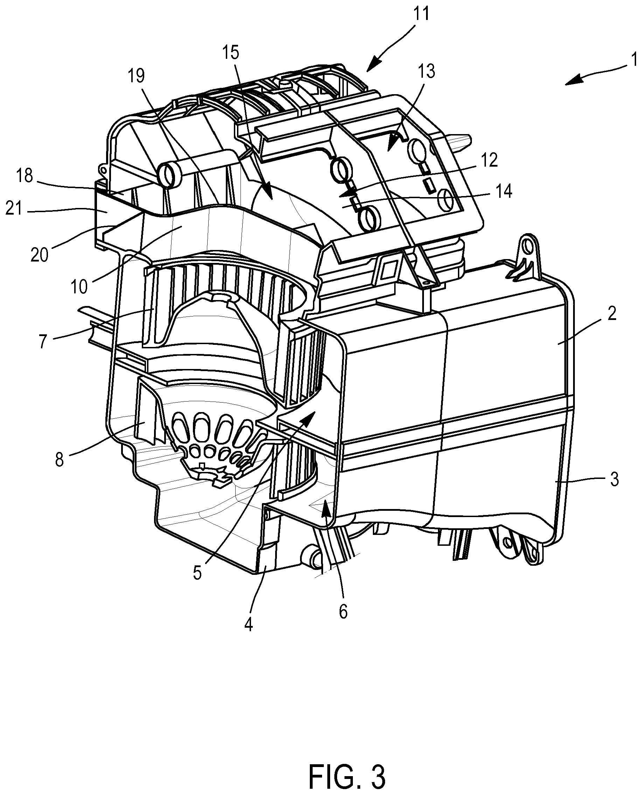

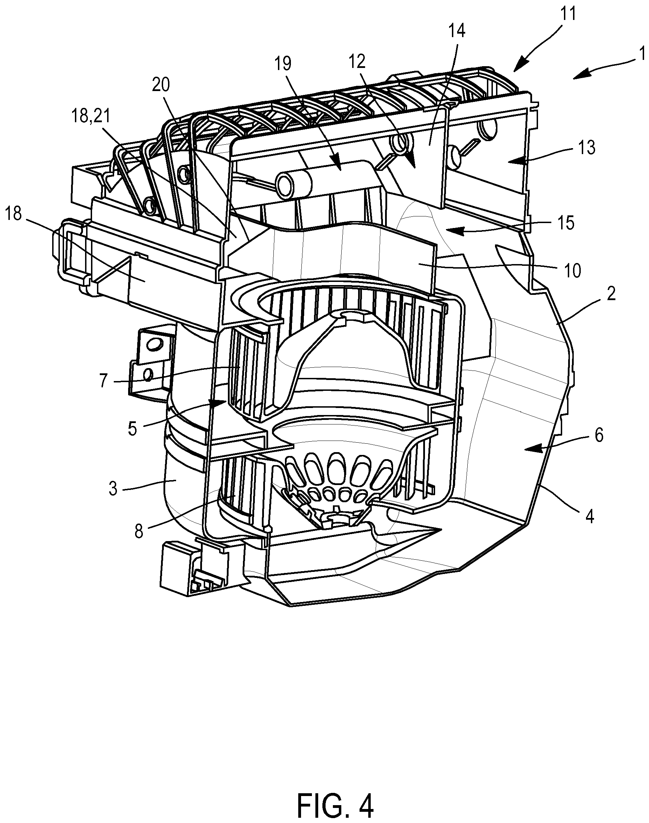

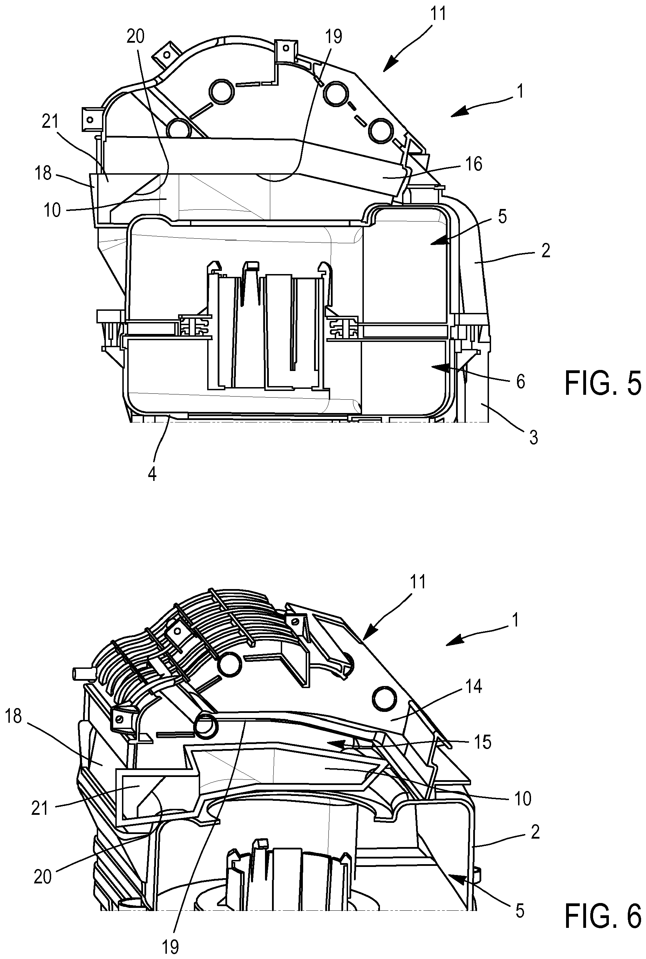

Les figures 1 à 9 illustrent une forme de réalisation d'un dispositif 1 de chauffage, ventilation et/ou climatisation pour un véhicule automobile. Celui-ci comporte un corps principal comportant un boîtier supérieur 2, un boîtier inférieur 3 et un capot 4, fixés les uns aux autres et délimitant un premier canal de circulation de fluide 5 ainsi qu'un second canal de circulation de fluide 6. Le boîtier supérieur 2 du corps principal est équipé d'une première roue à ailettes 7 montée dans le premier canal de circulation de fluide 5. Le boîtier inférieur 3 du corps principal est équipé d'une seconde roue à ailettes 8 montée dans le second canal de circulation de fluide 6. Les deux roues 7, 8 sont entraînées par un même moteur électrique. Plus particulièrement, le moteur comporte un arbre tournant (figures 5 et 6) faisant saillie de part et d'autre du moteur, respectivement au niveau d'une première partie couplée à la première roue 7 et d'une seconde partie couplée à la seconde roue 8.

Selon un autre mode de réalisation, le moteur comporte un arbre tournant faisant saillie d'un seul côté du moteur et sur lequel sont fixés la première roue 7 et la seconde roue 8.

Le boîtier supérieur 2 du corps principal comporte une paroi 10 de séparation des flux d'air, située en partie supérieure dudit boîtier 2. En vue de dessus, la paroi de séparation 10 a une forme générale de S, conséquence du positionnement des roues à ailettes 7, 8 dans le corps principal et des sections nécessaires des différents canaux de circulation 5, 6 d'air en vue d'atteindre les spécifications en termes de répartition de débit d'air.

Le dispositif comporte en outre un boîtier 11 d'entrée d'air fixé sur le corps principal, en particulier fixé sur le boîtier supérieur 2. Le boîtier 11 d'entrée d'air délimite un premier canal d'entrée 12 situé en regard du premier canal de circulation d'air 5, et un second canal d'entrée 13 situé en regard du second canal de circulation d'air 6. Les premier et second canaux 12, 13 du boîtier 11 d'entrée d'air sont séparés par une cloison de séparation 14, s'étendant en regard de la paroi de séparation 10 du corps principal.

Le boîtier d'entrée d'air 11 comporte en outre un logement 15 formant une zone de placement pour un filtre à air 16. En fonctionnement, ce filtre à air 16 s'étend globalement horizontalement, entre la paroi de séparation 10 et la cloison de séparation 14. En particulier, une première zone du filtre 16 s'étend entre le premier canal de circulation 2 et le premier canal d'entrée 12, une seconde zone du filtre 16 s'étendant entre le second canal de circulation 3 et le second canal d'entrée 13.

Comme illustré à la figure 1, un premier flux d'air F1 peut circuler au travers du premier canal d'entrée 12, de la première zone du filtre à air 16, et du premier canal de circulation 5 défini par le boîtier supérieur 2 et équipé de la roue 7, avant de déboucher dans une première zone de l'habitacle du véhicule automobile, par exemple au niveau de buses de dégivrage situées à proximité du pare-brise du véhicule.

Par ailleurs, un second flux d'air F2 peut circuler au travers du second canal d'entrée 13, de la seconde zone du filtre 16, de la partie du second canal de circulation 6 définie par le boîtier supérieur 2, de la partie du second canal de circulation 6 définie par le capot 4, et de la partie du second canal de circulation 6 définie par le boîtier inférieur 3 et équipée de la seconde roue 8, avant de déboucher dans une seconde zone de l'habitacle du véhicule automobile, par exemple au niveau des buses de pieds disposés en regard des pieds du conducteur et du passager.

Le premier flux d'air F1 et/ou le second flux d'air F2 peuvent être des flux d'air, extérieur au véhicule, ou d'air de recyclage issu de l'habitacle, ou encore être un mélange d'air extérieur et d'air de recyclage.

Le dispositif 1 est également équipé d'échangeurs de chaleur (évaporateur, radiateur) et/ou d'au moins un réchauffeur (résistance électrique), non réprésentés, permettant d'assurer les fonctions de climatisation (c'est-à-dire de refroidissement) de l'air, de chauffage de l'air et/ou de déshumidication (la déshumidification étant assurée par l'intermédiaire de l'évaporateur) de l'air, comme cela est bien connu en soi.

La cloison de séparation 14 et la paroi de séparation 10 assurent la continuité de la séparation entre les deux flux d'air F1, F2, directement en amont et directement en aval du filtre à air 16. On supposera que, compte tenu de la structure d'un filtre classique 16, l'effet de diffusion au sein du filtre à air 16 est négligeable, de sorte que cette séparation des flux F1, F2 est conservée lors du passage des flux d'air F1, F2 au travers du filtre 16 (et n'a nul besoin d'être étanche).

Comme indiqué précédemment, il est nécessaire de pouvoir retirer et changer le filtre à air 16, afin de garantir une bonne filtration et éviter une augmentation sensible des pertes de charge par bouchage du filtre 16.

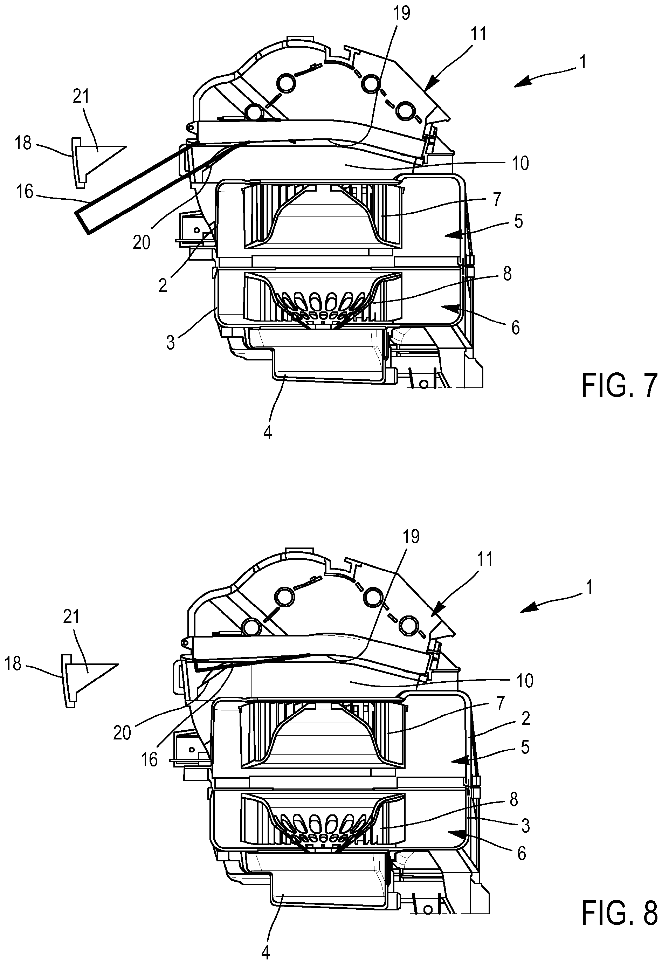

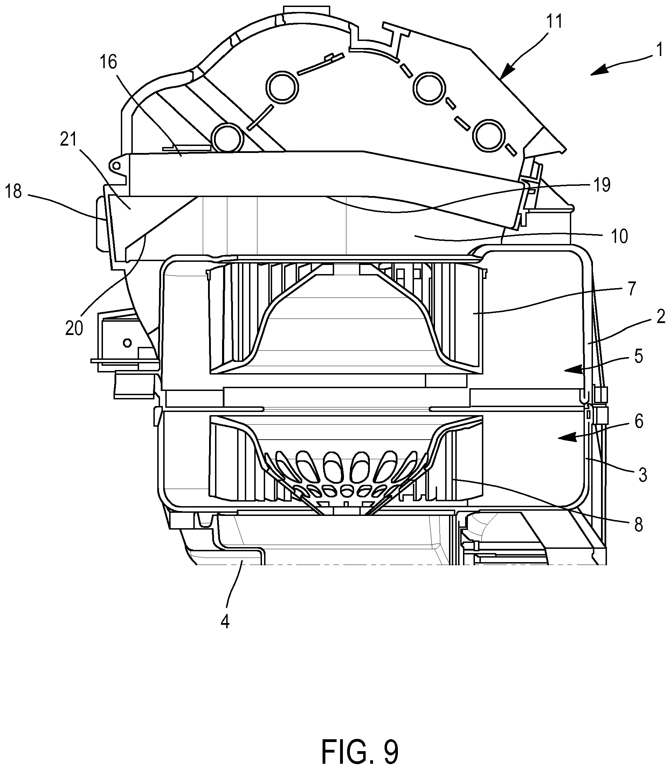

Pour cela, le corps principal, en particulier le boîtier supérieur 2, comporte un passage comprenant une première extrémité apte à être ouverte vers l'extérieur du dispositif 1 et une seconde extrémité ouverte en regard de la zone de placement 15 du boîtier d'entrée d'air 11, de façon à permettre le montage ou le démontage du filtre à air 16. Plus particulièrement, la première extrémité du passage comporte une trappe 18 amovible ou mobile entre une position ouverte permettant l'insertion ou le retrait du filtre (figures 7 et 8), et une position fermée (figure 9, notamment).

La paroi de séparation 10 s'étend directement sous le passage, cette paroi comportant un bord supérieur 19 dont une partie 20, située du côté de la première extrémité du passage, est oblique par rapport à l'horizontale.

La trappe 18 est équipée d'une paroi de séparation additionnelle 21, de forme complémentaire à la paroi de séparation 10 du boîtier supérieur 2 et située dans le prolongement de ladite paroi de séparation 10, en position fermée de la trappe 18, de manière à former une paroi continue.

Comme cela est illustré à la figure 7, pour insérer le filtre à air 16 dans le dispositif 1, il convient de retirer ou ouvrir la trappe 18, puis d'insérer le filtre 16 par la première extrémité du passage. Le filtre 16 glisse alors le long de la partie oblique 20 du bord supérieur 19 de la paroi de séparation 10 du boîtier supérieur 2. Comme illustré à la figure 8, en continuant le mouvement d'insertion du filtre à air 16, celui-ci se place progressivement dans la zone de placement 15 du boîtier d'entrée d'air 11, toujours en glissant le long du bord supérieur 19 de la paroi de séparation 10. Une fois que le filtre à air 16 est complètement inséré, il peut être plaqué manuellement vers le haut de façon à être complètement inséré dans la zone de placement 15 précitée, où il est maintenu en position par tous moyens appropriés. La trappe 18 peut alors être refermée, comme illustré à la figure 9. Une fois le filtre à air 16 en position et la trappe 18 refermée, le filtre à air 16 prend appui sur les bords supérieurs de la paroi de séparation 10 et de la paroi de séparation additionnelle 21.

## Revendications

1. Dispositif (1) de chauffage, ventilation et/ou climatisation pour un véhicule automobile, comprenant un corps principal (2, 3, 4) comportant au moins un premier canal (5) de circulation d'air (F1), destiné à alimenter une première partie d'un habitacle d'un véhicule automobile, un second canal (6) de circulation d'air (F2), destiné à alimenter une seconde partie de l'habitacle, un boîtier (11) d'entrée d'air monté sur le corps principal (2, 3, 4), en amont desdits premier et second canaux (5, 6) de circulation du corps principal par rapport au sens de circulation de l'air (F1, F2), un filtre à air (16) monté en amont desdits canaux (5, 6) de circulation du corps principal (2, 3, 4), par rapport au sens de circulation de l'air, le corps principal (2, 3, 4) comportant une paroi de séparation (10) séparant l'extrémité amont du premier canal de circulation (5) et l'extrémité amont du second canal de circulation (6), le filtre à air (16) étant logé, au moins en partie, dans une zone de placement (15) du boîtier d'entrée d'air (11), le filtre à air (16) reposant au moins en partie sur ladite paroi de séparation (10) du corps principal (2, 3, 4), **caractérise en ce que**
ladite paroi de séparation (10) ayant, en vue de dessus, une forme de générale de S.

2. Dispositif (1) selon la revendication 1, **caractérisé en ce que** le corps principal (2, 3, 4) comporte un passage comprenant une première extrémité apte à être ouverte vers l'extérieur du dispositif (1) et une seconde extrémité ouverte en regard de la zone de placement (15) du boîtier d'entrée d'air (11), de façon à permettre le montage ou le démontage du filtre à air (16).

3. Dispositif (1) selon la revendication 2, **caractérisé en ce que** la première extrémité du passage du corps principal (2, 3, 4) comporte une trappe (18) amovible ou mobile entre une position ouverte permettant l'insertion ou le retrait du filtre à air (16), et une position fermée.

4. Dispositif (1) selon la revendication 3, **caractérisé en ce que** la trappe (18) est équipée d'une paroi additionnelle de séparation (21), située dans le prolongement de la paroi de séparation (10), en position fermée de la trappe (18).

5. Dispositif (1) selon l'une des revendications 1 à 4, **caractérisé en ce que** la paroi de séparation (10) comporte un bord (19) tourné vers la zone de placement (15), le filtre à air (16) étant apte à s'appuyer sur ledit bord (19) lors de son insertion dans ledit passage par la première extrémité.

6. Dispositif (1) selon l'une des revendications 1 à 5, **caractérisé en ce que** le boîtier (11) d'entrée d'air est traversé par un premier canal d'entrée (12), débouchant en regard du premier canal (5) de circulation du corps principal (2, 3, 4), et par un second canal d'entrée (13) débouchant en regard du second canal (6) de circulation du corps principal (2, 3, 4), les premier et second canaux d'entrée (12, 13) du boîtier (11) d'entrée d'air étant séparés par une cloison de séparation (14) du boîtier d'entrée d'air (11), s'étendant en regard de la paroi de séparation (10) du corps principal (2, 3, 4).

7. Dispositif (1) selon l'une des revendications 1 à 6, **caractérisé en ce que** le corps principal (2, 3, 4) est équipé de moyens (7) de génération d'un premier flux d'air (F1) à l'intérieur du premier canal de circulation (5) et de moyens (8) de génération d'un second flux d'air (F2) à l'intérieur du second canal de circulation (6).

8. Dispositif (1) selon la revendication 7, **caractérisé en ce que** lesdits moyens (7, 8) de génération du premier et du second flux d'air (F1, F2) comportent respectivement une première roue à ailettes (7) et une seconde roue à ailettes (8), entraînées par exemple par un même moteur.

9. Dispositif (1) selon la revendication 7 ou 8, **caractérisé en ce que** le corps principal comporte un premier boîtier (2), équipé des moyens (7) de génération du premier flux d'air (F1), et dans lequel est délimitée au moins une partie du premier canal (5) de circulation d'air, le corps principal comportant en outre un second boîtier (3), équipé des moyens (8) de génération du second flux d'air (F2), et dans lequel est délimitée au moins une partie du second canal (6) de circulation d'air.

10. Véhicule automobile, **caractérisé en ce qu'**il est équipé d'un dispositif (1) selon l'une des revendications 1 à 9.

## Patentansprüche

1. Heiz-, Lüftungs- und/oder Klimatisierungsvorrichtung (1) für ein Kraftfahrzeug, die einen Hauptkörper (2, 3, 4), der mindestens einen ersten Kanal (5) zur Luftzirkulation (F1), der dazu bestimmt ist, mindestens einen ersten Teil eines Innenraums eines Kraftfahrzeugs zu versorgen, und einen zweiten Kanal (6) zur Luftzirkulation (F2) aufweist, der dazu bestimmt ist, einen zweiten Teil des Innenraums zu versorgen, ein Lufteintrittsgehäuse (11), das auf den Hauptkörper (2, 3, 4) stromaufwärts vor dem ersten und zweiten Zirkulationskanal (5, 6) des Hauptkörpers bezüglich der Zirkulationsrichtung der Luft (F1, F2) montiert ist, und einen Luftfilter (16) enthält, der stromaufwärts vor den ersten Zirkulationskanälen (5, 6) des Hauptkörpers (2, 3, 4) bezüglich der Zirkulationsrichtung der Luft montiert ist, wobei der Hauptkörper (2, 3, 4) eine Trennwand (10) aufweist, die das stromaufwärtige Ende des ersten Zirkulationskanals (5) und das stromaufwärtige Ende des zweiten Zirkulationskanals (6) trennt, wobei der Luftfilter (16) zumindest zum Teil in einer Platzierungszone (15) des Lufteintrittsgehäuses (11) untergebracht ist, wobei der Luftfilter (16) zumindest zum Teil auf der Trennwand (10) des Hauptkörpers (2, 3, 4) ruht, **dadurch gekennzeichnet, dass** die Trennwand (10) in Draufsicht eine allgemeine S-Form hat.

2. Vorrichtung (1) nach Anspruch 1, **dadurch gekennzeichnet, dass** der Hauptkörper (2, 3, 4) einen Durchlass aufweist, der ein erstes Ende, das zur Außenseite der Vorrichtung (1) offen sein kann, und ein zweites Ende enthält, das gegenüber der Platzierungszone (15) des Lufteintrittsgehäuses (11) offen ist, um den Ein- oder Ausbau des Luftfilters (16) zu erlauben.

3. Vorrichtung (1) nach Anspruch 2, **dadurch gekennzeichnet, dass** das erste Ende des Durchlasses des Hauptkörpers (2, 3, 4) eine entfernbare oder zwischen einer offenen Stellung, die das Einführen oder Herausnehmen des Luftfilters (16) erlaubt, und einer geschlossenen Stellung bewegliche Klappe (18) aufweist.

4. Vorrichtung (1) nach Anspruch 3, **dadurch gekennzeichnet, dass** die Klappe (18) mit einer zusätzlichen Trennwand (21) ausgestattet ist, die sich in der geschlossenen Stellung der Klappe (18) in der Verlängerung der Trennwand (10) befindet.

5. Vorrichtung (1) nach einem der Ansprüche 1 bis 4, **dadurch gekennzeichnet, dass** die Trennwand (10) einen zur Platzierungszone (15) weisenden Rand (19) aufweist, wobei der Luftfilter (16) sich bei seiner Einführung in den Durchlass über das erste Ende auf den Rand (19) auflegen kann.

6. Vorrichtung (1) nach einem der Ansprüche 1 bis 5, **dadurch gekennzeichnet, dass** das Lufteintrittsgehäuse (11) von einem ersten Eintrittskanal (12), der gegenüber dem ersten Zirkulationskanal (5) des Hauptkörpers (2, 3, 4) mündet, und von einem zweiten Eintrittskanal (13) durchquert wird, der gegenüber dem zweiten Zirkulationskanal (6) des Hauptkörpers (2, 3, 4) mündet, wobei der erste und der zweite Eintrittskanal (12, 13) des Lufteintrittsgehäuses (11) durch eine Trennzwischenwand (14) des Lufteintrittsgehäuses (11) getrennt werden, die sich gegenüber der Trennwand (10) des Hauptkörpers (2, 3, 4) erstreckt.

7. Vorrichtung (1) nach einem der Ansprüche 1 bis 6, **dadurch gekennzeichnet, dass** der Hauptkörper (2, 3, 4) mit Einrichtungen (7) zur Erzeugung eines ersten Luftstroms (F1) im Inneren des ersten Zirkulationskanals (5) und mit Einrichtungen (8) zur Erzeugung eines zweiten Luftstroms (F2) im Inneren des zweiten Zirkulationskanals (6) ausgestattet ist.

8. Vorrichtung (1) nach Anspruch 7, **dadurch gekennzeichnet, dass** die Einrichtungen (7, 8) zur Erzeugung des ersten und des zweiten Luftstroms (F1, F2) ein erstes Flügelrad (7) bzw. ein zweites Flügelrad (8) aufweisen, die zum Beispiel vom gleichen Motor angetrieben werden.

9. Vorrichtung (1) nach Anspruch 7 oder 8, **dadurch gekennzeichnet, dass** der Hauptkörper ein erstes Gehäuse (2) aufweist, das mit den Einrichtungen (7) zur Erzeugung des ersten Luftstroms (F1) ausgestattet ist, und in dem mindestens ein Teil des ersten Luftzirkulationskanals (5) begrenzt ist, wobei der Hauptkörper außerdem ein zweites Gehäuse (3) aufweist, das mit den Einrichtungen (8) zur Erzeugung des zweiten Luftstroms (F2) ausgestattet ist, und in dem mindestens ein Teil des zweiten Luftzirkulationskanals (6) begrenzt ist.

10. Kraftfahrzeug, **dadurch gekennzeichnet, dass** es mit einer Vorrichtung (1) nach einem der Ansprüche 1 bis 9 ausgestattet ist.

## Claims

1. Heating, ventilation and/or air-conditioning device (1) for a motor vehicle, comprising a main body (2, 3, 4) having at least a first duct (5) for circulation of air (F1), intended to supply a first part of an interior of a motor vehicle, a second duct (6) for circulation of air (F2), intended to supply a second part of the interior, an air-inlet housing (11) mounted on the main body (2, 3, 4) upstream of the said first and second circulation ducts (5, 6) of the main body with respect to the direction of circulation of the air (F1, F2), an air filter (16) mounted upstream of the said circulation ducts (5, 6) of the main body (2, 3, 4) with respect to the direction of circulation of the air, the main body (2, 3, 4) having a separation wall (10) separating the upstream end of the first circulation duct (5) and the upstream end of the second circulation duct (6), the air filter (16) being housed, at least in part, in a placement region (15) for the air-inlet housing (11), the air filter (16) resting at least in part on the said separation wall (10) of the main body (2, 3, 4), **characterized in that** the said separation wall (10) has, when seen in plan view, a general S shape.

2. Device (1) according to Claim 1, **characterized in that** the main body (2, 3, 4) has a passage comprising a first end able to be opened towards the outside of the device (1) and a second open end facing the placement region (15) for the air-inlet housing (11), so as to allow the air filter (16) to be mounted or demounted.

3. Device (1) according to Claim 2, **characterized in that** the first end of the passage of the main body (2, 3, 4) has a flap (18) which is removable or movable between an open position allowing the insertion or the removal of the air filter (16), and a closed position.

4. Device (1) according to Claim 3, **characterized in that** the flap (18) is equipped with an additional separation wall (21) situated in the continuation of the separation wall (10) in the closed position of the flap (18).

5. Device (1) according to one of Claims 1 to 4, **characterized in that** the separation wall (10) has an edge (19) directed towards the placement region (15), the air filter (16) being able to bear on the said edge (19) during insertion thereof into the said passage through the first end.

6. Device (1) according to one of Claims 1 to 5, **characterized in that** the air-inlet housing (11) is traversed by a first inlet duct (12), which opens out facing the first circulation duct (5) of the main body (2, 3, 4), and by a second inlet duct (13) which opens out facing the second circulation duct (6) of the main body (2, 3, 4), the first and second inlet ducts (12, 13) of the air-inlet housing (11) being separated by a separation partition (14) of the air-inlet housing (11) that extends facing the separation wall (10) of the main body (2, 3, 4).

7. Device (1) according to one of Claims 1 to 6, **characterized in that** the main body (2, 3, 4) is equipped with means (7) for generating a first air flow (F1) inside the first circulation duct (5) and with means (8) for generating a second air flow (F2) inside the second circulation duct (6).

8. Device (1) according to Claim 7, **characterized in that** the said means (7, 8) for generating the first and second air flow (F1, F2) respectively comprise a first impeller wheel (7) and a second impeller wheel (8) which are driven, for example, by one and the same motor.

9. Device (1) according to Claim 7 or 8, **characterized in that** the main body has a first housing (2) equipped with the means (7) for generating the first air flow (F1) and in which at least a part of the first air-circulation duct (5) is delimited, the main body additionally having a second housing (3) equipped with the means (8) for generating the second air flow (F2) and in which at least a part of the second air-circulation duct (6) is delimited.

10. Motor vehicle, **characterized in that** it is equipped with a device (1) according to one of Claims 1 to 9.
